(19) Europäisches Patentamt
European Patent Office
Office européen des brevets

(11) Publication number: **0 085 232**
**A2**

(12) # EUROPEAN PATENT APPLICATION

(21) Application number: 82306201.3

(22) Date of filing: 22.11.82

(51) Int. Cl.³: C 09 B 45/16
//C09B67/44

(30) Priority: 25.01.82 GB 8201958

(43) Date of publication of application:
10.08.83 Bulletin 83/32

(84) Designated Contracting States:
BE CH DE FR GB IT LI NL

(71) Applicant: IMPERIAL CHEMICAL INDUSTRIES PLC
Imperial Chemical House Millbank
London SW1P 3JF(GB)

(72) Inventor: Ridyard, Denis Robert Annesley
6 Haven Close Hazel Grove
Stockport Cheshire(GB)

(74) Representative: Marklow, Raymond Joseph et al,
Imperial Chemical Industries PLC Legal Department:
Patents Thames House North Millbank
London SW1P 4QG(GB)

(54) **Metal complex dyestuffs.**

(57) Dyestuffs comprising 2:1 chromium complexes from mixtures of azo dyestuffs which in the free acid form are represented by formula (1):

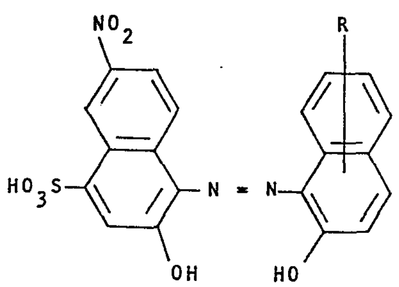

(1)

there being 60-95 mol% of the azo dyestuff wherein R is H and 40-5 mol% of the azo dyestuff wherein R is $SO_3H$.

These dyestuffs are good black colours for wool and nylon and may be obtained in the form of concentrated aqueous solutions. Their properties are better than could be expected from the aggregate of properties of the metal complex dyestuffs from individual azo dyestuffs of formula (1).

EP 0 085 232 A2

METAL COMPLEX DYESTUFFS

This invention relates to metal complex dyestuffs especially those from mixtures of monoazo dyestuffs.

The 2:1 chromium complex of an azo dyestuff of formula (1)

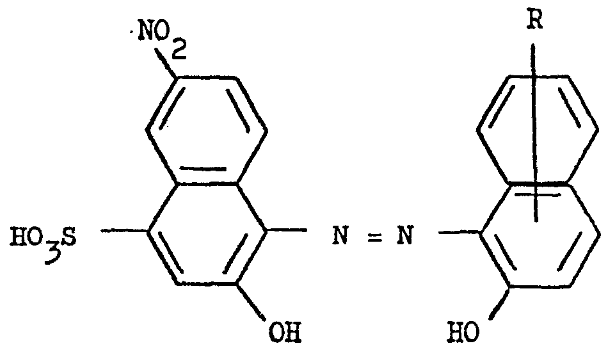

(1)

in which R is H is a known and valuable dyestuff for colouring, for example, polyamide fibres.

It is often found desirable to have such dyestuffs in the form of solutions so that dyers and printers may make up dyebaths and print pastes without handling solid dyestuffs which may be dusty and difficult to wet out and dissolve. To minimise transport costs and storage space it is desirable to have solutions as concentrated as possible. Various means of achieving this have been proposed, for example, the solution may be in solvents other than water but this increases cost and the risk of hazards from fire or toxicity. Concentrated solution in mainly or entirely water can be achieved by various membrane techniques such as reverse osmosis which removes water and unwanted inorganic salts from aqueous solutions of crude dyestuff.

With some dyestuffs including the one mentioned above attempts to achieve significant concentration by reverse osmosis are of very limited success due to the solution quickly acquiring a high viscosity or a gelatinous character. Closely related

dyes e.g. the 2:1 chromium complexes from dyestuffs of formula (1) in which R is $SO_3H$ can be formed in to concentrated solutions but such dyes **have poor affinity for polyamide fibres.**

We have now found, surprisingly, some mixtures of the two types of dyestuff combine the desirable properties of each i.e. concentrated solutions may be formed and polyamides coloured satisfactorily, without any significant reduction of these properties as might be expected from an aggregate of the properties of the components.

According to the present invention there are provided dyestuffs comprising 2:1 chromium complexes from mixtures of azo dyestuffs which in the free acid form are represented by formula (1), there being 60-95 mol % of the azo dyestuff wherein R is H and 40 to 5 mol % of the azo dyestuff wherein R is $SO_3H$.

It is preferred that the mixture of azo dyestuffs has 75-90 mol % of the azo dyestuff of formula (1) wherein R is H and 25-10 mol % of the azo dyestuff wherein R is $SO_3H$.

It is further preferred that the dyestuff of formula (1) wherein R is $SO_3H$ is 2,2'-dihydroxy-6-nitroazonaphthalene-4,8'-disulphonic acid or especially 2,2'-dihydroxy-6-nitroazo naphthalene-4,6'-disulphonic acid.

The dyestuffs of the present invention may be manufactured by any conventional process for producing 2:1 chromium complexes using the appropriate mixture of azo dyestuffs of formula (1).

Typically such processes react a chromic salt such as chloride, acetate or sulphate with azo dyestuff in an aqueous medium at a pH ranging from mildly alkaline to mildly acid say from 3 to 9. It is usual to heat the medium to facilitate reaction e.g. at 60 to 100°C.

The mixture of azo dyestuffs of formula (1) for use in the above process may be obtained by mixing the individual dyes but is more conveniently obtained by coupling the diazonium salt from 1-amino-2-hydroxy-6-nitronaphthalene-4-sulphonic acid with

the appropriate mixture of 2-naphthol and 2-naphthol sulphonic acid.

This coupling may be achieved under conventional conditions used for azo dyestuff manufacture. Suitable 2-naphthol sulphonic acids are 2-naphthol-3, 4, 5, 6, 7 or 8-sulphonic acid.

The dyestuffs of the present invention may be isolated in solid form e.g. by spray drying or salting out but it is usually preferred to use them in the form of aqueous solution. The solution resulting from the manufacturing process may be used directly or it may be concentrated. Suitable techniques for concentrating the solution include membrane methods such as reverse osmosis which remove water and low molecular weight inorganic species whose presence tends to reduce solubility of the dyestuff.

These aqueous solutions, which form a further feature of the invention have typical concentrations in the range 15 to 40% by weight of dyestuff. They often have added to them conventional additives to minimise the adverse effects of exposure to the atmosphere or low temperatures. For example they may contain small amounts of hygroscopic materials e.g. ethylene glycol to reduce surface evaporation and crust formation. Also surface active materials or colloids may be added to ensure any solid material separating at low temperatures remains finely dispersed to facilitate redissolving when temperatures rise.

The dyestuffs of the present invention have the ability to be formed into concentrated aqueous solutions in contrast with dye of formula (1) in which R is H which yield highly viscous and finally gelatinous masses when concentrated. The dyes of the present invention have similar colouring power to the dye of formula (1) wherein R is H which is surprising since the dye of formula (1) wherein R is $SO_3H$ has very lower colouring power on many substrates.

The dyes of the invention are suitable for applying to polyamide textile materials such as wool and silk but especially to synthetic polyamide textile materials, for example nylon 66, nylon 6 and nylon 11, using any of the general methods known for the application of acid dyes to such materials. The dyes provide black colouration having a high degree of fastness to wet treatments and to light.

The invention is illustrated by the following Examples.

Example 1

295 g 1-diazo-6-nitro-2-hydroxynaphthalene-4-sulphonic acid were suspended in 1100 g water and 500 g of ice. Approximately 446 g 10M sodium hydroxide solution were added to adjust the pH to 1.0 maintaining the temperature at 25-30°C with further ice addition. A solution of the diazonium salt is formed. A mixture of 127 g of 2-hydroxynaphthalene and 49.3 g of 2-hydroxynaphthalene-6-sulphonic acid were dissolved in 600 g of water by the addition of approximately 162 g of 10M sodium hydroxide solution to adjust the pH to 12 at 40°C. The coupling solution was then added to the diazonium salt until the coupling is complete. Approximately 136 g of 10M hydrochloric acid were added to the coupling to adjust the pH to between 6.5 and 7.0. A solution of 133 g of chromic chloride dissolved in 160 g of water was then added to the coupling suspensions and the pH adjusted to 4.5 with hydrochloric acid as necessary. The preparation was heated at 97°C for 3 hours at pH 4.5 to complete the formation of the chromium complex. After cooling to ambient temperature the product was then concentrated and the concentration of inorganic salts reduced by means of a semi-permeable membrane as follows.

100 g of the above product were concentrated in a reverse osmosis plant having 0.84 $m^2$ area of a membrane with nominal sodium chloride retention of 40%. Concentration was carried out at a pressure of 40 bar until 70 g of permeate is

removed. The product was then subjected to diafiltration with 70 g of water at constant volume and then further concentrated by the removal of a further 5 g of water. To the resultant 25 g of concentrated desalinated dyestuff was added 2.9 g of ethylene glycol as humectant and 1.5 g of the sodium salt of a formaldehyde-naphthalene sulphonic acid condensate.

When applied to nylon under neutral to slightly acid conditions the product provided a black colouration having a high degree of fastness to wet treatment and to light.

Example 2

The 127 g of 2-hydroxynaphthalene and the 49.3 g of 2-hydroxynaphthalene-6-sulphonic acid in Example 1 were replaced by 118.8 g of 2-hydroxynaphthalene and 61.6 g of 2-hydroxynaphthalene-6-sulphonic acid respectively and a product with similar properties was obtained.

Example 3

The 127 g of 2-hydroxynaphthalene and the 49.3 g of 2-hydroxynaphthalene-6-sulphonic acid in Example 1 were replaced by 142.6 g of 2-hydroxynaphthalene and 24.6 g of 2-hydroxynaphthalene-6-sulphonic acid respectively and a product with similar properties was obtained.

Examples 4 and 5

The procedure of Example 1 was repeated replacing the 49.3 g of 2-hydroxynaphthalene-6-sulphonic acid by an equal weight of 2-hydroxynaphthalene-7-sulphonic acid (Example 4) or 2-hydroxynaphthalene-5-sulphonic acid (Example 5) and essentially similar products were obtained.

CLAIMS

1. Dyestuffs comprising 2:1 chromium complexes from mixtures of azo dyestuffs which in the free acid form are represented by formula (1):

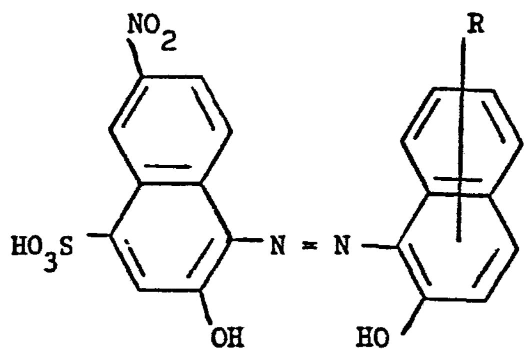

(1)

there being 60-95 mol % of the azo dyestuff wherein R is H and 40-5 mol % of the azo dyestuff wherein R is $SO_3H$.

2. Dyestuffs as claimed in claim 1 wherein the mixture of azo dyestuffs has 75-90 mol % of the azo dyestuff of formula (1) wherein R is H and 25-10 mol % of the azo dyestuff wherein R is $SO_3H$.

3. Dyestuffs as claimed in claim 1 or 2 wherein the dyestuff of formula (1) wherein R is $SO_3H$ is 2,2'-dihydroxy-6-nitroazonaphthalene-4,8'-disulphonic acid.

4. Dyestuffs as claimed in claim 1 or 2 wherein the dyestuff of formula (1) wherein R is $SO_3H$ is 2,2'-dihydroxy-6-nitroazonaphthalene-4,6'-disulphonic acid.

5. Dyestuffs as claimed in claim 1 or 2 wherein the dyestuff of formula (1) wherein R is $SO_3H$ is 2,2'-dihydroxy-6-nitroazonaphthalene-4,5'-disulphonic acid.

6. Dyestuffs as claimed in claim 1 or 2 wherein the dyestuff of formula (1) wherein R is $SO_3H$ is 2,2'-dihydroxy-6-nitroazonaphthalene-4,7'-disulphonic acid.

7. Dyestuffs as claimed in claim 1 in the form of an aqueous solution.

8. Solutions as claimed in claim 5 containing from 15-40% by weight of dyestuff.

RJM/BH

17.11.82.